# EUROPÄISCHE PATENTSCHRIFT

(11) **EP 1 415 869 B1**
(45) Veröffentlichungstag und Bekanntmachung des Hinweises auf die Patenterteilung: **21.03.2007**
(21) Anmeldenummer: 03023576.6
(22) Anmeldetag: 16.10.2003
(51) Int. Cl.: B60R 21/20

(54) **Gassackmodul und Fahrzeuglenkrad mit einem Gassackmodul**
Airbag module and steering wheel with an airbag module
Module de coussin gonflable et volant comprenant un module de coussin gonflable

(30) Priorität: 30.10.2002 DE 20216754 U
(43) Veröffentlichungstag der Anmeldung: 06.05.2004
(73) Patentinhaber: TRW Automotive Safety Systems GmbH, 63743 Aschaffenburg (DE)
(72) Erfinder: Helmstetter, Matthias, 63743 Aschaffenburg (DE)
(74) Vertreter: Kitzhofer, Thomas

(56) Entgegenhaltungen:
- US-A- 5 327 796
- US-A1- 2001 002 084

## Beschreibung

Die Erfindung betrifft ein Fahrzeuglenkrad nach dem Oberbegriff des Anspruchs 1.

Am Generatorträger können neben dem Gasgenerator auch eine Abdeckkappe und ein Gassack befestigt sein, wie dies z.B. in der US 5 327 796 A dargestellt ist. Dort dient eine metallene Basisplatte sowohl zur lasttragenden Verbindung des Gassackmoduls mit einer Lenkradnabe als auch der Halterung der topfförmigen Abdeckkappe, die den gefalteten Gassack aufnimmt. Die Abdeckkappe weist zwei Schichten aus unterschiedlichen Kunststoffinaterialien auf.

Die gattungsgemäße DE 40 08 960 A zeigt einen Generatorträger aus einem z.B. faserverstärkten Kunststoff, der zusätzlich innen auf einer topfförmigen Aufnahme bzw. im Bereich von elektrischen Anschlüssen eine Beschichtung aufweisen kann.

Es ist möglich, Generatorträger zur Befestigung des Gasgenerators ganz oder teilweise aus Kunststoff zu fertigen.

Die Erfindung ermoglicht eine kostengünstige Fertigung besonders gut auf die gestellten Anforderungen abgestimmten Gassackmoduls.

Dies wird bei einem Fahrzeuglenkrad der eingangs genannten Art durch die Merkmale des Anspruchs 1 erreicht. So können unterschiedliche Materialeigenschaften verschiedener Kunststoffe optimal ausgenutzt werden. Zum Beispiel kann durch das Einbringen einer elastischen Komponente zusätzlich zu einer harten Trägerkomponente auf einfache und kostengünstige Weise eine schwingungsdämpfende oder geräuschreduzierende Wirkung (letzteres zur Vermeidung von Klappergeräuschen) erzielt werden.

Der Generatorträger weist eine topfförmige Gestalt mit einer Vertiefung auf, in der der Gasgenerator angeordnet ist. Wenn der Generatorträger das Modulgehäuse bildet, erstreckt sich bevorzugt eine Wandung der Vertiefung über eine größere Vertikalausdehnung als der Generator, so daß in der Vertiefung zusätzlich ein Gassack angeordnet sein kann. Topfförmige Gestalt heißt, ein Körper hat einen Boden und eine davon ausgehende, schräg oder senkrecht vom Boden abstehende Seitenwand.

Es ist möglich, die Vertiefung so zu gestalten, daß eine Abdeckkappe in die Vertiefung eingesetzt werden kann, die den als Modulgehäuse wirkenden Generatorträger nach außen abschließt. Dies gestattet, den Gasgenerator und den Gassack auf einfache Weise im Modulgehäuse anzuordnen und abschließend das Modulgehäuse durch die Abdeckkappe staubdicht zu verschließen.

Den Rand der Vertiefung ist wenigstens ein seitlich abstehender Abschnitt ausgebildet. Der abstehende Abschnitt kann den Rand der Vertiefung ganz oder teilweise umgeben. Am abstehenden Abschnitt lassen sich Schalter befestigen, die somit einen mit engen Toleranzen bestimmbaren Sitz relativ zur Abdeckkappe haben. Bei bisherigen Gassackmodulen waren stets zahlreiche Zwischenbleche zwischen Schalter und Abdeckkappe vorgesehen, die eine große Toleranzkette und große Spalte zwischen Schalter und Abdeckkappe verursachten.

Das erfindungsgemäße Gassackmodul findet bevorzugt Einsatz in einem erfindungsgemäßen Lenkrad, bei dem der abstehende Abschnitt einen Teil der von außen sichtbaren Oberfläche des Lenkrads bildet und vorteilhaft einen zwischen dem Gassackmodul und dem angrenzenden umschäumten Lenkradskelett gebildeten, die Optik des Lenkrads beeinträchtigenden Spalt abdeckt.

Der abstehende Abschnitt besteht aus einem mehrkomponentigen Kunststoff, z.B. in Form einer Beschichtung auf einem harten Trägermaterial. Das Material der Beschichtung ist bevorzugt ein weicher Kunststoff, der, je nach dem gewünschten Einsatzzweck und Aussehen, ein entsprechendes Design und eine entsprechende Haptik aufweisen kann. Der Generatorträger hat also einen Schichtaufbau.

Die mehrkomponentigen Abschnitte sind bevorzugt aus einem Trägermaterial und einer darauf aufgebrachten weicheren Beschichtung realisiert, die im Grenzbereich miteinander verbunden sind.

Ganz allgemein läßt sich ein mehrkomponentige Abschnitte aufweisender Generatorträger auch leicht und flexibel an verschiedene Anforderungen unterschiedlicher Einsatzgebiete sowohl bezüglich der Geometrie als auch der Schwingungsdämpfungseigenschaften anpassen.

Bevorzugt bildet der Generatorträger das Modulgehäuse, das Gasgenerator und Gassack aufnimmt, so daß auf ein zusätzliches Bauteil verzichtet werden kann.

Es ist möglich, am Generatorträger Rastelemente zur lenkradseitigen Verbindung des Gassackmoduls anzuformen, bevorzugt an einem Bodenabschnitt des Generatorträgers. Diese Rastelemente bestehen vorteilhaft aus einem mehrkomponentigen Kunststoff mit einer elastischen Komponente und einer hierzu separaten, stabilen Trägerkomponente. Durch die Verwendung eines mehrkomponentigen Materials läßt sich sowohl eine Geräusch- oder Schwingungsdämpfung als auch die notwendige hohe Stabilität auf einfache Weise erreichen.

Das Gassackmodul kann in axialer Richtung beweglich im Lenkrad befestigt und so ausgelegt sein, daß durch die axiale Bewegung ein Kontakt zur Betätigung eines Hupe geschlossen werden kann. In diesem Fall ist ein Generatorträger, dessen Seitenrand in einen sichtbaren Abschnitt des Lenkrads übergeht, besonders vorteilhaft. Ein zur Betätigung der Hupe erfolgender Druck auf den abstehenden Abschnitt wird direkt an einen z.B. im Bereich der Rasthaken angeordneten Kontakt übertragen, was eine erhebliche Reduzierung von Toleranzen im Vergleich zu bekannten Lenkrädern, bei denen die Vertikalbewegung von der Abdeckkappe an das Modulgehäuse weitergegeben wird, bewirkt. Darüber hinaus ergibt sich eine Bauteilreduzierung.

Weitere Merkmale und Vorteile der Erfindung ergeben sich aus der nachfolgenden Beschreibung eines Ausführungsbeispiels in Verbindung mit den beigefügten Zeichnungen. In diesen zeigen:

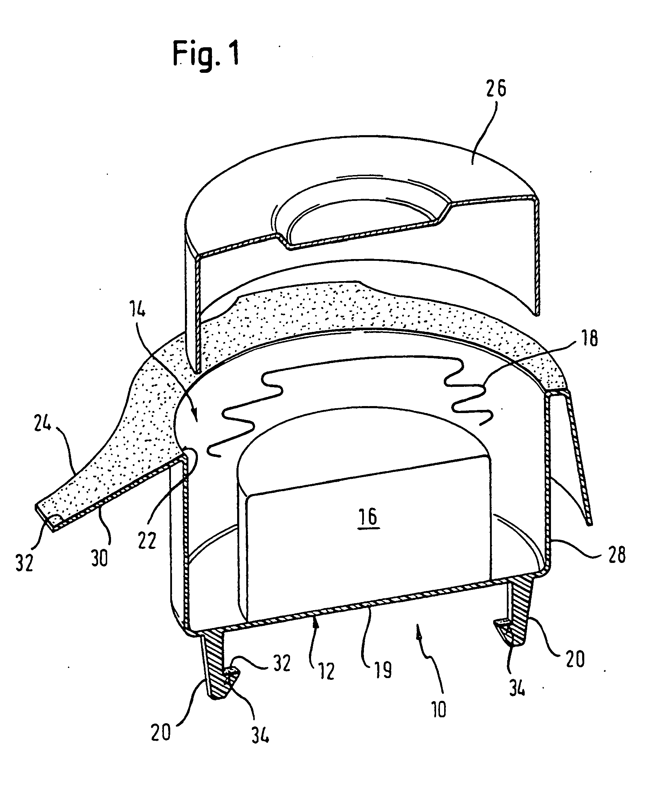

- Figur 1 einen schematischen Schnitt durch ein erfindungsgemäßes Gassackmodul; und
- Figur 2 eine schematische Schnittansicht eines erfindungsgemäßen Lenkrads.

Das Gassackmodul 10 enthält einen Generatorträger 12, der eine topfförmige Gestalt mit einer durch sie definierten Vertiefung 14 oder Aufnahme aufweist, in der ein Gasgenerator 16 sowie ein gefalteter Gassack 18 (schematisch gezeigt) angeordnet sind. Der Gasgenerator 16 ist im Generatorträger 12 auf eine geeignete bekannte Weise befestigt. Im hier gezeigten Beispiel ist das Modulgehäuse vollständig durch den Generatorträger 12 gebildet. Es ist jedoch auch möglich, den Generatorträger in einem separaten Modulgehäuse anzuordnen, welches am Lenkrad befestigt ist.

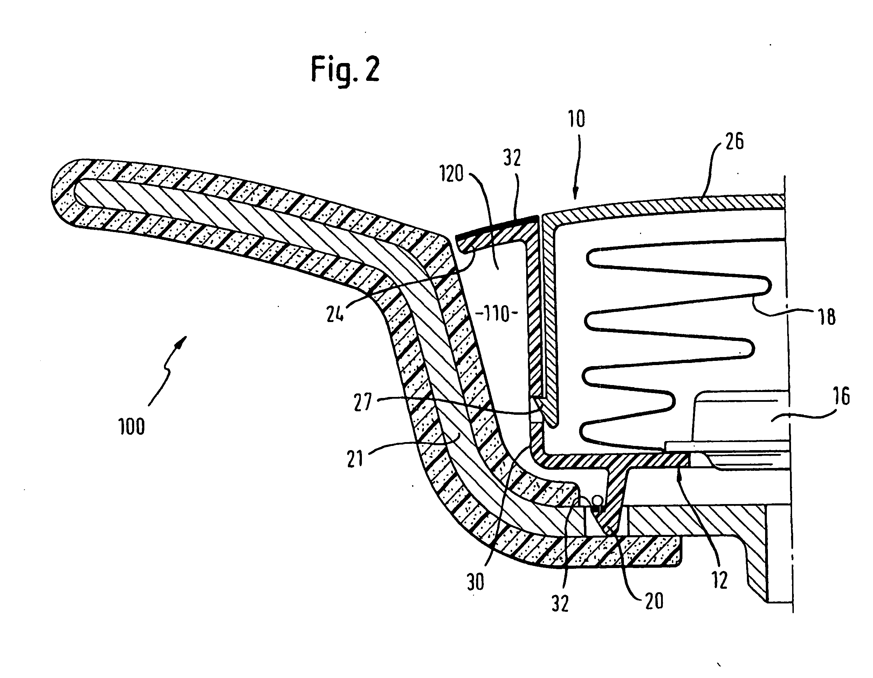

An einem Bodenabschnitt 19 der topfförmigen Aufnahme sind Rastelemente 20 einstückig angeformt, mit denen das Gassackmodul 10 z. B. an einem Skelett 21 des Lenkrads (siehe Figur 2) verrastet werden kann. Form und Ausbildung der Rastelemente 20 können vom Fachmann auf den jeweiligen Einsatzzweck abgestimmt werden. Bevorzugt sind Lenkrad und Rastelemente so ausgebildet, daß das Gassackmodul im Lenkrad in axialer Richtung zur Betätigung einer Hupe bewegt werden kann.

Die Vertiefung 14 kann durch eine Abdeckkappe 26, die in die Vertiefung 14 mit einem Preßsitz eingeschoben wird, verschlossen werden. Die Abdeckkappe 26 ist in der Form dem Querschnitt der topfförmigen Aufnahme angepaßt und weist einen Rand auf, der im aufgesetzten Zustand in die Aufnahme oder Vertiefung 14 hineinragt und so die Abdeckkappe 26 am Generatorträger 12 z.B. über Rasthaken 27 fixiert (siehe Figur 2).

Einstückig angeformt an den oberen Rand 22 der Aufnahme ist ein seitlich abstehender Abschnitt 24, der einstückig mit dem Generatorträger 12 ausgebildet ist.

Ist das Modul 10 in einen Aufnahmeraum 110 eines Lenkrad 100 eingesetzt, wie in Figur 2 zu sehen ist, bildet der seitlich abstehende Abschnitt 24 einen sichtbaren Teil der Außenseite des Nabenbereichs des Lenkrads 110. Der abstehende Abschnitt 24 ist entsprechend der Geometrie des Lenkrads geformt und hat längs der Speichen verlaufende Abschnitte. Der zwischen der Wandung 28 des topfförmigen Abschnitts 14 des Generatorträgers 12 und der lenkradseitigen Begrenzung des Aufnahmeraums 110 des Lenkrads 100 gebildete Spalt 120 ist nach außen durch den oder die abstehenden Abschnitte 24 abgedeckt.

Die Betätigung der Hupe erfolgt z. B. durch Druck auf den seitlich abstehenden Abschnitt 24, wobei die Kraft über den einstückigen Generatorträger direkt auf die Hupkontakte übertragen wird.

Der Generatorträger 12 besteht abschnittsweise aus einem zwei- oder mehrkomponentigen Kunststoff. In der hier gezeigten Ausführungsform sind die Wandung 28 und der Bodenabschnitt 19 des "Topfes" aus einem harten Kunststoff gebildet, der eine hohe Stabilität gewährleistet, z.B. aus einem glasfaserverstärkten Polyamid-6, aus Polyethylen (PET), aus Polyoxymethylen (POM) oder einem anderen geeigneten Material. In den Rastelementen 20 und dem abstehenden Abschnitt 24 hingegen ist ein derartiger harter Kunststoff als Trägerkomponente 30 eingesetzt und mit einem weicheren Kunststoff 32, z.B. einem styrolbasierten Kunststoff (z.B. SEBS), einem thermoplastischen Urethan (TPU), einem thermoplastischen Olefin oder einem anderen geeigneten Material beschichtet. Der Generatorträger 12 hat also einen Schichtaufbau, die Schichten werden durch einzelne Komponenten gebildet.

Das Material der Beschichtung 32 wird je nach der zu erfüllenden Funktion ausgewählt. Für die Beschichtung von Rastflächen 34 der Rasthaken 20 ist ein Material günstig, das geräusch- und schwingungsdämpfend wirkt. Für die Beschichtung 32 des den seitlich abstehenden Abschnitts 24 wiederum ist ein Material vorteilhaft, das in Haptik, Aussehen und Umweltstabilität den gewünschten Eigenschaften für eine sichtbare Oberfläche des Lenkrads entspricht.

Der Generatorträger 12 bildet mit den Rasthaken 20 und dem oder den abstehenden Abschnitten 24 ein einstückiges Bauteil, wobei die nicht beschichteten Abschnitte bevorzugt komplett aus der Trägerkomponente bestehen. Die Beschichtung der jeweiligen Teile des Generatorträgers 12 besteht bevorzugt aus einer dünnen Schicht, die großflächig aufgebracht sein kann.

## Patentansprüche

1. Fahrzeuglenkrad
mit einem Gassackmodul, das einen Gasgenerator (16) und einen Generatorträger (12), an dem der Gasgenerator (16) befestigt ist und über den der Gasgenerator (16) direkt oder indirekt am Fahrzeuglenkrad (100) befestigbar ist, aufweist,
wobei der Generatorträger (12) wenigstens abschnittsweise aus einem mehrkomponentigen Kunststoff (30, 32) besteht, die Komponenten verschiedene Schichten bilden und der Generatorträger (12) eine topfförmige Gestalt mit einer Vertiefung (14) aufweist, in der der Gasgenerator (16) angeordnet ist,
**dadurch gekennzeichnet, daß** am Rand (22) der Vertiefung (14) wenigstens ein seitlich abstehender Abschnitt (24) ausgebildet ist, der aus einem mehrkomponentigen Kunststoff (30, 32) besteht, wobei der abstehende Abschnitt (24) einen Teil einer von außen sichtbaren Oberfläche des Fahrzeuglenkrads (100) bildet.

2. Fahrzeuglenkrad nach Anspruch 1, **dadurch gekennzeichnet, daß** an einem Bodenabschnitt (19) des Generatorträgers (12) Rastelemente (20) angeformt sind, über die der Generatorträger (12) lenkradseitig befestigbar ist.

3. Fahrzeuglenkrad nach Anspruch 2, **dadurch gekennzeichnet, daß** die Rastelemente (20) wenigstens abschnittsweise aus einem mehrkomponentigen Kunststoff (30, 32) bestehen.

4. Fahrzeuglenkrad nach einem der vorhergehenden Ansprüche, **dadurch gekennzeichnet, daß** der mehrkomponentige Kunststoff aus einem Trägermaterial (30) und einer Beschichtung (32) besteht.

5. Fahrzeuglenkrad nach einem der vorhergehenden Ansprüche, **dadurch gekennzeichnet, daß** eine Abdeckkappe (26) vorgesehen ist, die in die Vertiefung (14) eingesetzt werden kann, und daß die Vertiefung (14) so ausgebildet ist, daß die Abdeckkappe (26) den Generatorträger nach außen abschließt.

6. Fahrzeuglenkrad nach einem der vorhergehenden Ansprüche, **dadurch gekennzeichnet, daß** das Gassackmodul in axialer Richtung beweglich gelagert ist.

## Claims

1. A vehicle steering wheel
comprising a gas bag module including a gas generator (16) and a generator carrier (12) to which the gas generator (16) is fastened and via which the gas generator (16) can be fastened directly or indirectly to the vehicle steering wheel (100),
the generator carrier (12) consisting at least partially of a multiple-component plastic (30, 32), the components forming different layers, and the generator carrier (12) having a cup-shaped form with a depression (14) in which the gas generator (16) is arranged,
**characterized in that** on the edge (22) of the depression (14) at least one laterally projecting section (24) is formed which consists of a multiple-component plastic (30, 32), the projecting section (24) forming a part of a surface of the vehicle steering wheel (100) which is visible from the exterior.

2. The vehicle steering wheel according to Claim 1, **characterized in that** detent elements (20) are formed integrally with a base section (19) of the generator carrier (12), by means of which detent elements the generator carrier (12) can be fastened on the steering wheel side.

3. The vehicle steering wheel according to Claim 2, **characterized in that** the detent elements (20) consist at least partially of a multiple-component plastic (30, 32).

4. The vehicle steering wheel according to any of the preceding claims, **characterized in that** the multiple-component plastic consists of a carrier material (30) and a coating (32).

5. The vehicle steering wheel according to any of the preceding claims, **characterized in that** a covering cap (26) is provided which can be inserted into the depression (14), and that the depression (14) is configured such that the covering cap (26) closes the generator carrier externally.

6. The vehicle steering wheel according to any of the preceding claims, **characterized in that** the gas bag module is mounted so as to be movable in the axial direction.

## Revendications

1. Volant de direction de véhicule,
comportant un module de coussin à gaz qui présente un générateur de gaz (16) et un support de générateur de gaz (12) sur lequel est fixé le générateur de gaz (16) et par l'intermédiaire duquel le générateur de gaz (16) peut être fixé directement ou indirectement sur le volant de direction de véhicule (100),
le support de générateur de gaz (12) étant constitué au moins partiellement, par une matière plastique à plusieurs composants (30, 32), les composants formant plusieurs couches, et le support de générateur de gaz (12) présentant une forme de pot avec un renfoncement (14) dans lequel est agencé le générateur de gaz (16),
**caractérisé en ce que** sur le bord (22) du renfoncement (14) est réalisé au moins un tronçon (24) faisant saillie latéralement, lequel est constitué par une matière plastique à plusieurs composants (30, 32), le tronçon en saillie (24) formant une partie de la surface visible depuis l'extérieur, du volant de direction de véhicule (100).

2. Volant de direction de véhicule selon la revendication 1, **caractérisé en ce que** sur un tronçon de fond (19) du support de générateur de gaz (12) sont conformés des éléments d'enclenchement (20) par l'intermédiaire desquels le support de générateur de gaz (12) peut être fixé côté volant de direction.

3. Volant de direction de véhicule selon la revendication 2, **caractérisé en ce que** les éléments d'enclenchement (20) sont constitués au moins partiellement par une matière plastique à plusieurs composants (30, 32).

4. Volant de direction de véhicule selon l'une des revendications précédentes, **caractérisé en ce que** la matière plastique à plusieurs composants est constituée par un matériau support (30) et par un revêtement (32).

5. Volant de direction de véhicule selon l'une des revendications précédentes, **caractérisé en ce qu'**il est prévu un couvercle (26) qui peut être mis en place dans le renfoncement (14), et **en ce que** le renfoncement (14) est réalisé de telle sorte que le couvercle (26) ferme le support de générateur de gaz vers l'extérieur.

6. Volant de direction de véhicule selon l'une des revendications précédentes, **caractérisé en ce que** le module de coussin à gaz est monté mobile en direction axiale.
